(19) Europäisches Patentamt
European Patent Office
Office européen des brevets

(11) **EP 2 356 272 B1**

(12) **FASCICULE DE BREVET EUROPEEN**

(45) Date de publication et mention
de la délivrance du brevet:
**17.10.2012 Bulletin 2012/42**

(51) Int Cl.:
*D04H 3/10* (2012.01)      *B29B 11/16* (2006.01)
*B32B 5/26* (2006.01)      *D04B 21/20* (2006.01)
*D05B 1/06* (2006.01)

(21) Numéro de dépôt: **09801508.4**

(22) Date de dépôt: **08.12.2009**

(86) Numéro de dépôt international:
**PCT/FR2009/052441**

(87) Numéro de publication internationale:
**WO 2010/067003 (17.06.2010 Gazette 2010/24)**

(54) **NOUVEAU MATERIAU INTERMEDIAIRE DESTINE A LIMITER LES MICROFISSURATIONS DE PIECES COMPOSITES**

NEUARTIGES INTERMEDIAT ZUR MINIMIERUNG DER MIKRORISSBILDUNG BEI VERBUNDTEILEN

NOVEL INTERMEDIATE MATERIAL INTENDED TO LIMIT THE MICROCRACKING OF COMPOSITE PARTS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.12.2008 FR 0858378**

(43) Date de publication de la demande:
**17.08.2011 Bulletin 2011/33**

(73) Titulaire: **Hexcel Reinforcements**
**01120 Dagneux (FR)**

(72) Inventeurs:
• **BERAUD, Jean-Marc**
**F-38140 Rives (FR)**

• **HENRAT, Patrick**
**F-69100 Villeurbanne (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A- 1 175 998        EP-A- 1 473 132**
**WO-A-98/10128        US-A- 4 913 937**
**US-A1- 2005 059 309**

**Description**

La présente invention concerne le domaine technique des matériaux de renfort, adaptés à la constitution de pièces composites. Plus précisément, l'invention concerne un nouveau matériau intermédiaire pour la réalisation de pièces composites, notamment par injection ou infusion ultérieure de résine thermodurcissable, un procédé de fabrication de pièces composites à partir d'un tel matériau, ainsi que les pièces composites obtenues.

La fabrication de pièces ou d'articles composites, c'est-à-dire comprenant, d'une part, un ou plusieurs renforts ou nappes fibreuses et, d'autre part, une matrice principalement de type thermodurcissable (« résine ») et pouvant inclure des thermoplastiques, peut, par exemple, être réalisée par un procédé dit "direct" ou "LCM" (de l'anglais Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions, en température, puis une fois que toute la quantité de résine nécessaire est contenue dans la préforme, l'ensemble est porté à une température plus élevée pour réaliser le cycle de polymérisation/réticulation et ainsi entraîner son durcissement. La matrice utilisée est de type thermodurcissable. La résine injectée sera, par exemple choisie parmi les polymères thermodurcissables suivants : les époxydes, les polyesters insaturés, les vinylesters, les phénoliques, les polyimides, les bismaléimides.

Les pièces composites utilisées dans l'industrie automobile, aéronautique ou navale, sont en particulier soumises à des exigences très strictes, notamment en termes de propriétés mécaniques. Il est donc particulièrement important de disposer de matériaux qui, d'une part permettent d'obtenir des pièces d'une grande régularité, et d'autre part offrent des facilités de manipulation et de mise en oeuvre.

Dans ce contexte, des matériaux nommés multiaxiaux ou « NCF » (de l'anglais « Non Crimp Fabrics »), ont été élaborés. Ces matériaux sont constitués d'un empilement de nappes de fils unidirectionnelles, les nappes unidirectionnelles étant réalisées en orientant les fils des nappes, de manière à obtenir des fibres au sein de la pièce composite, orientées dans des directions faisant par exemple un angle de 0°, 30°, 45°, 60°, 90°, 120° ou 135° avec l'axe principal de la pièce. Les nappes de fils de carbone ainsi déposés selon les orientations choisies sont liées entre elles par couture ou tricotage grâce à un fil de couture ou tricotage. De telles nappes cousues réalisées à partir de fils de carbone contenant entre 3000 et 24000 filaments de carbone (3 K et 24 K) sont, par exemple, commercialisées par la société Sigmatex UK Limited (Cheshire WA7 1TE, Angleterre) sous la référence MC8021270 (quadriaxial de quatre couches de 268g/m$^2$ cousues avec un fil de 80dTex). Le fil de couture a simplement pour but de maintenir ensemble, les différentes nappes, pour former un produit intermédiaire manipulable.

Un tel mode de liaison par couture ou tricotage limite l'épanouissement des fils au sein des nappes au niveau des coutures ou tricotage, ce qui a pour effet de créer des zones d'espacement entre les fils de renfort. Une des conséquences d'un tel phénomène est l'augmentation de la perméabilité transverse du matériau, lorsqu il est associé à une matrice de résine, lors de la réalisation de pièces composites. Ceci favorise donc la mise en oeuvre d'un tel matériau intermédiaire, par LRI ou RFI notamment.

Cependant, il a été constaté que les pièces réalisées, avec de tels matériaux intermédiaires présentaient sous cyclage hygrothermique des microfissurations susceptibles d'altérer la durabilité des structures. Or, pendant sa durée de vie, une structure aéronautique subit des cycles thermiques et des période d'humidification (parking dans un désert chaud, vol en haute altitude par grand froid, reprise d'humidité lors de phases statiques au sol par exemple lors de maintenance, séchage lors des vols, ....). Un tel phénomène peut rendre l'utilisation des multiaxiaux de l'art antérieur peu adaptée à ce type d'applications.

Aussi, la présente invention a pour but de proposer un nouveau produit intermédiaire à base de nappes unidirectionnelles, permettant de limiter l'apparition de microfissurations dans les pièces composites réalisées ultérieurement, lorsque ces dernières sont soumises à des sollicitations fygrothermiques.

Le produit intermédiaire selon invention, se doit également d'être facilement manipulable et de pouvoir être fabriqué aisément et à faible coût.

Dans ce contexte, la présente invention a pour objet un produit intermédiaire, destiné à la réalisation d'une pièce composite par association avec une matrice de résine thermodurcissable, constitué d'au moins deux nappes unidirectionnelles de fils de renfort, les fils de chacune des deux nappes s'étendant dans une direction différente, dans lequel les nappes sont liées entre elles, par couture ou tricotage au moyen d'au moins un fil de couture ou tricotage, caractérisé en ce que ledit fil de couture ou tricotage présente un titre déterminé selon la norme EN ISO 2060 inférieur ou égal à 30dTex, préférentiellement inférieur ou égal à 25dTex. Dans le cadre de la présente invention, il est fait référence à la norme EN ISO 2060 dans sa version de juin 1995 et les mesures de titre sont effectuées selon la variante 1, sur la base du fil non lavé, la masse du fil étant conditionné en équilibre avec l'atmosphère normale d'essai.

A titre d'exemple de matériau constitutif du fil de couture particulièrement adapté dans le cadre de invention, on peut citer les polyesters (PET), les polypropylènes (PP), les polyéthylènes (PE), les polysulfures de phénylène (PPS), les polyéthylènes naphtalates (PEN), les polymères à cristaux liquides (LCP), les polycétones, les polyamides, le carbone, le verre, le basalte, la silice, et leur mélange. Les polyéthylène téréphtalate, polybutylène téréphtalate, polytriméthylène téréphtalate, acide polylactique et leurs copolymères sont des exemples de polyesters pouvant être mis en oeuvre. A titre d'exemple de polycétones, on peut citer les PEEK et PEKK. A titre d'exemple de polyamide présentant une faible reprise d'humidité, on peut citer le PA 6,10 et le PA 6,12. En effet, il pourrait être intéressant que le fil de couture ou tricotage soit en un matériau présentant un taux de reprise d'humidité déterminé selon la norme ASTM D629-99 (paragraphe 9) inférieur ou égal à 0,4%. De même, l'invention est d'autant plus avantageuse, lorsque le fil de couture ou tricotage est en un matériau non soluble dans la matrice de résine, aux températures de constitution de la pièce composite, étant donné que les fils de couture solubles dans la matrice de résine sont moins propices à la constitution de zones riches en résine, dans lesquelles se produisent les microfissurations sous sollicitations hygrothermiques.

Par ailleurs, le fil de couture ou tricotage peut, par exemple, posséder une tenacité de rupture mesurée selon ISO EN 2062 dans sa version de 1995 comprise entre 20cN/Tex et 100cN/Tex. Selon certains modes de réalisation, le fil de couture ou tricotage peut posséder une élongation à la rupture mesurée selon ISO EN 2062 dans sa version de 1995 comprise entre 10% et 60%.

D'une manière préférée également, les fils de couture utilisés auront été lavés et ne comporteront pas d'ensimage ou d'huile en surface, ou auront au plus un taux massique d'ensimage inférieur à 1,3%. L'ensimage présent est préférentiellement minéral et, de façon avantageuse, ne contient pas de silicone ou de dérivé de silicone.

A titre d'exemple de mode de réalisation particulier, le fil de couture peut être un fil de 23 dtex de la famille des polyesters.

La présente invention a également pour objet un procédé de fabrication d'une pièce composite comprenant une étape d'addition, notamment par infusion ou injection, d'une résine thermodurcissable, à un matériau intermédiaire selon l'invention, puis une étape de consolidation de la pièce souhaitée par une étape de polymérisation/réticulation suivant un cycle défini en température et sous pression, suivie d'un refroidissement.

Les pièces composites composées, au moins en partie, d'une association d'un produit intermédiaire selon l'invention à une matrice de résine thermodurcissable, et susceptibles d'être obtenues selon un tel procédé font partie intégrante de l'invention.

De telles pièces composites sont caractérisées par des zones riches en résine au niveau des fils de couture, de faible taille, ce qui permet de minimiser les microfissures, sous sollicitations cycliques hygrothermiques. En effet, il a été constaté, dans le cadre de l'invention, que la mise en oeuvre de fils de couture de titre faible permettait de réduire les zones, autour des fils de couture, qui ne contiennent pas de fibres de renfort, et où se produisent les premières microfissurations lorsque la pièce est soumise à des sollicitations hygrothermiques. Ces zones situées autour des fils de couture qui ne contiennent pas de fil de renfort et sont nommées « zones riches en résine ». Notamment, les zones riches en résine, sur les pièces obtenues, présentent une hauteur moyenne, mesurée dans un plan parallèle aux nappes unidirectionnelles du produit intermédiaire et situé au niveau du milieu du produit intermédiaire, au plus égale à 0,11 mm.

Diverses autres caractéristiques ressortent de la description faite ci-dessous en référence aux dessins annexés.

La **Figure 1** est une vue en perspective éclatée d'un produit intermédiaire conforme à l'invention, composé d'un multiaxial à 3 couches 45°/135°/0°, cousu.

La **Figure 2** est une vue schématique en perspective d'un produit intermédiaire conforme à l'invention, composé d'un multiaxial à quatre couches mettant en évidence un mode de couture avec points chainettes.

La **Figure 3** est une vue de dessus d'un produit intermédiaire conforme à l'invention, mettant en évidence un autre mode de couture selon un point avec mouvement de barre à passette.

La **Figure 4** représente le cycle hygrothermique pour tester des statifiés conformes à l'invention.

La **Figure 5** représente le profil de découpe de l'échantillon 1, au sein des éprouvettes.

La **Figure 6** met en évidence la position du plan d'observation, défini par le plan de découpe, par rapport aux points de couture et aux nappes unidirectionnelles.

La **Figure 7** présente les valeurs des facteurs d obtenus sur des échantillons différents, après un nombre de cycles hygrothermiques déterminé.

La **Figure 8** est une image d'une microfissure obtenue avec le stratifié de l'exemple comparatif 3 (polyester 35dtex), après 400 cycles hygrothermiques.

La **Figure 9** présente l'évolution de la densité de fissures, en fonction du nombre de cycles hygrothermiques, dans le cas du stratifié de l'exemple 1, et de son équivalent réalisé avec des tissus unidirectionnels (appelé ainsi car seule une direction est tissée en fil de renfort et commercialisé sous la référence G1157 par la société Hexcel), le grammage du tissu étant équivalent au grammage d'une nappe unidirectionelle du multiaxial de l'exemple 1, et de son équivalent réalisé avec des nappes multiaxiales décousues.

La **Figure 10** montre une zone riche en résine au niveau d'un fil de couture dans le cas du stratifié de l'exemple 1.

Les **Figures 11** et **12** présentent les dimensions « petit axe » correspondant à la hauteur d'une zone riche en résine au niveau d'un fil de couture dans le cas de stratifiés, en fonction du titre et de la nature du fil de couture utilisé.

L'invention est particulièrement appropriée aux matériaux intermédiaires réalisés avec des nappes unidirectionnelles de fils de renfort, en un matériau choisi parmi le carbone, les verres, basaltes, aramides, silices, céramiques et leurs mélanges. Les fibres peuvent être naturelles ou synthétiques. Les céramiques utilisables sont notamment le carbure de silicium et les oxydes réfractaires, par exemple, alumine et zircone. Le carbone, utilisé dans le domaine de l'aéronautique, est néanmoins préféré.

Chaque nappe de fils est constituée de fils s'étendant parallèlement les uns aux autres. Un fil est en général constitué d'un ensemble de fibres ou filaments et comporte, en général, dans le cas des fils de carbone, de 1 000 à 80 000 filaments, avantageusement de 12 000 à 24 000 filaments. De façon, particulièrement préférée, dans le cadre de l'invention, des fils de carbone de 1 à 24 K, et préférentiellement de 12 et 24K, sont utilisés. Les fibres constitutives peuvent être discontinues, craquées ou sont, de préférence, continues. Les fils utilisés présentent en général une section droite transversale sensiblement circulaire (qualifiés de fils ronds) ou, de préférence, sensiblement parallélépipédique ou elliptique (qualifiés de fils plats). Ces fils présentent une certaine largeur et épaisseur. A titre d'exemple, un fil plat de carbone de 3 000 à 24 000 filaments présente le plus souvent une largeur de 1 à 12 mm. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001). Dans les nappes unidirectionnelles, les fils de renfort sont, de préférence, non associés à un liant polymérique et donc qualifiés de secs, c'est-à-dire qu'ils ne sont ni imprégnés, ni enduits, avec un quelconque liant polymérique. Les fibres de carbone sont, néanmoins, le plus souvent caractérisées par un taux massique d'ensimage standard pouvant représenter au plus 2% de leur masse, mais de telles fibres restent qualifiées de sèches.

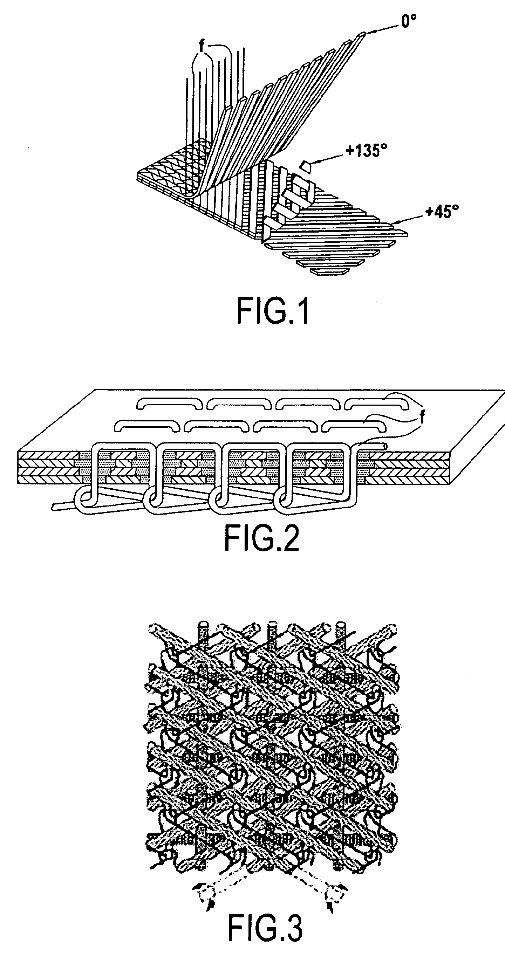

Les nappes unidirectionnelles sont constituées d'un ensemble de fils s'étendant dans chaque nappe selon une même direction, comme, par exemple, illustré **Figure 1.** Les fils sont disposés de manière à assurer une couverture quasi-totale sur toute la surface de la nappe. Dans chacune des nappes constitutives du matériau intermédiaire, les fils sont disposés bord à bord, en minimisant, voire évitant tout manquement de matière (« gap » en anglais) ou chevauchement (« overlap » en anglais). Dans le reste de la description, une nappe unidirectionnelle est également nommée pli, sans plus de précision, alors qu'elle constitue bien entendu un pli particulier dans lequel les fils sont tous parallèles entre eux.

Selon un mode de réalisation particulier, pouvant s'appliquer à toutes les variantes ci-dessus et ci-après décrites, la masse surfacique de chacune des nappes unidirectionnelles constitutives du matériau intermédiaire est comprise dans la gamme allant de 50g/m$^2$ à 600g/m$^2$, préférentiellement dans la gamme allant de 130g/m$^2$ à 270g/m$^2$. La masse surfacique peut, notamment, être déterminée selon la norme NF EN 12127 dans sa version de Mars 1998.

Le produit intermédiaire peut être constitué de deux, trois, quatre ou cinq nappes unidirectionnelles, voir plus. Les fils de renfort s'étendent parallèlement entre eux au sein de chaque nappe unidirectionnelle. Mais d'une nappe à l'autre, les orientations des fils sont différentes. En particulier, le matériau intermédiaire selon l'invention est composé de nappes unidirectionnelles s'étendant selon des orientations différentes choisies parmi les angles 0°, 30°, 45°, 60°, 90°, 120°, 135°. Toutes les nappes peuvent présenter des orientations différentes ou seulement certaines d'entre elles. A titre d'exemple, le produit intermédiaire selon l'invention pourra être réalisé selon les empilements suivants : 0°/90°, 90°/0°, 45°/135°, 135/45°, 90°/0°/90°, 0°/90°/0°, 135°/45°/135°, 45°/135°/45°, 0°/45°/90°, 90°/45°/0°, 45°/0°/90°, 90°/0°/45°, 0°/135°/90°, 90°/135°/0°, 135°/0°/90°, 90°/0°/135°, 45°/0°/135°, 135°/0°/45°, 45°/135°/0°, 0°/135°/45°, 45°/135°/90°, 90°/135°/45°, 135°/45°/0°, 0°/45°/135°, 135°/45°/90°, 90°/45°/135°, 60°/0°/120°, 120°/0°/60°, 30°/0°/150°, 150°/0°/30°, 135°/0°/45°/90°, 90°/45°/0°/135°, 45°/135°/0°/90°, 90°/0°/135°/45°, 0°/45°/135°/90°, 90°/135°/45°/90°, 90°/135°/0°/45°, 45°/0°/135°/90°, le 0° correspondant à la direction d'avancement de la machine permettant de réaliser le matériau intermédiaire selon l'invention, et donc également à la direction générale des fils de couture. La **Figure 1** illustre un tel produit intermédiaire à trois couches (triaxial) **45°/135°/0°,** assemblées ensemble, grâce à un fil de couture **f.** La réalisation de tels multiaxiaux est connue et met en oeuvre des techniques classiques par exemples décrites dans l'ouvrage « «Textile Structural Composites, Composite Materials Series Volume 3 » de Tsu Wei Chou & Franck.K.Ko, ISBN 0-444-42992-1, Elsevier Science Publishers B.V., 1989, Chapitre 5, paragraphe 3.3 ou dans le brevet FR2761380 qui décrit un procédé et un dispositif pour la réalisation de nappes fibreuses multiaxiales. Notamment, les nappes unidirectionnelles peuvent être constituées avant ou déposées en ligne, au moment de la constitution du multiaxial.

La liaison par couture ou tricotage peut être réalisée par toute technique connue, notamment mettant en oeuvre une machine de type tricot chaine, et par exemple selon des points de chainette (« chain stitch » en anglais), ou points noués (« lock stitch » en anglais). La **Figure 2** est une vue schématique en perspective d'un produit intermédiaire conforme à l'invention, composé d'un multiaxial à quatre couches mettant en évidence un mode de couture avec points chainettes.

La liaison par couture ou tricotage entre les différentes nappes unidirectionnelles peut être réalisée selon des points de couture ou tricotage, s'étendant sur des lignes parallèles entre elles. Notamment, les points de couture ou tricotage sont espacés, au sein d'une même ligne selon un pas, de préférence identique, de 1 à 20 mm, de préférence de 2 à 12 mm. De même, deux lignes de couture ou tricotage consécutives sont, par exemple, espacées l'une de l'autre de 2 à 50 mm, de préférence de 5 à 15 mm. De préférence, toutes les lignes consécutives de couture d'une série de lignes parallèles entre elles seront espacées d'une distance identique. Un mode de réalisation dans lequel la liaison entre les nappes est réalisés par « couture zig zag » avec mouvements de barre à passette est illustré **Figure 3.** De façon avantageuse, les points de coutures seront suffisamment lâches, cette notion étant bien connue de l'homme du métier, pour éviter des phénomènes de tension non désirables. A titre d'exemple, dans le cas de points de chainette, un fil lâche peut être caractérisé par une longueur de fil absorbée (LFA) de 3700mm/m à 4000mm/m pour un multiaxial à quatre couches de 268g/m$^2$.

Les produits intermédiaires selon l'invention sont adaptés et destinés à être utilisés, en combinaison avec une matrice de résine, pour la réalisation de pièces composites, notamment dans le domaine de l'industrie automobile, aéronautique ou navale. Les procédés mis en oeuvre sont des procédés directs. De telles pièces peuvent se présenter sous la forme de stratifiés plus ou moins complexes.

La constitution de la pièce composite peut nécessiter le drapage du produit intermédiaire selon l'invention, à l'intérieur d'un moule et éventuellement son empilement avec d'autres matériaux de renfort. L'empilement peut être constitué de plusieurs produits intermédiaires selon l'invention. Ensuite, une résine ou matrice, de type thermodurcissable, est ajoutée, par exemple par injection dans le moule contenant les produits intermédiaires (procédé "RTM", de l'anglais Resin Transfer Molding), par infusion (dans un moule, au travers de l'épaisseur des plis : procédé "LRI", de l'anglais Liquid Resin Infusion ou procédé "RFI", de l'anglais Resin Film Infusion), ou bien encore par enduction/imprégnation manuelle au rouleau ou au pinceau, sur chacun des produits intermédiaires, appliqués de manière successive sur la forme du moule utilisé.

La résine constitutive de la matrice est une résine thermodurcissable et pourra, par exemple, être choisie parmi les époxydes, les polyesters insaturés, les vinylesters, les polyuréthanes, les phénoliques, les polyimides, les bismaléimides, et leur mélange. Elle pourra contenir des additifs du type plastifiant ou particules de polymères thermoplastiques, ou tout autre additif classiquement utilisé dans les résines thermodurcissables mises en oeuvre pour la réalisation de pièces composites, notamment dans le domaine aéronautique.

Au final, la pièce composite est obtenue selon un cycle classique de traitement thermique des polymères considérés recommandé par les fournisseurs de ces polymères, et connu de l'homme du métier. Cette étape ultérieure de traitement thermique, conduisant au polymère thermodur correspondant, est classiquement employée dans les différents procédés de réalisation de pièces composites de l'art antérieur. Les procédés directs classiquement mis en oeuvre, à partir de renforts fibreux, pour la réalisation de pièces composites, et notamment les conditions de température et pression, sont directement transposables à la mise en oeuvre des produits intermédiaires selon l'invention.

Les produits intermédiaires selon l'invention sont particulièrement adaptés à la réalisation de pièces composites dans le domaine de l'aéronautique, et notamment des pièces de structure utilisées en aéronautique, tels les cadres de fuselage, les peaux de voilure, les peaux de fuselage, les peaux de dérives, les peaux d'empennage horizontal, les cloisons étanches, le caisson central, les aubes de réacteur. Les pièces obtenues présentent des zones riches en résine réduites et l'apparition de microfissurations sous sollicitations hygrothermiques est très limitée. Notamment, ces pièces présentent des zones riches en résine au niveau des fils de couture dont la hauteur, mesurée dans un plan parallèle aux nappes unidirectionnelles constitutives de l'empilement cousu et situé au niveau du milieu de cet empilement, est au plus égale à 0,11 mm. L'empilement cousu correspond à un produit intermédiaire selon l'invention. Par exemple, dans le cas d'un empilement de quatre nappes unidirectionnelles cousues, composant en partie la pièce, la mesure est donc effectuée sur un plan situé entre les deux plis du centre (ce qui correspond au milieu de l'épaisseur de l'empilement) et, dans le cas d'un empilement de trois nappes unidirectionnelles cousues, la mesure est effectuée sur un plan située au milieu de la nappe centrale. Dans ce plan, la zone riche en résine, qui le plus souvent peut être grossièrement assimilée à une ellipse, présente une plus grande dimension qui définit un grand axe. Dans ce même plan, la hauteur est la plus grande dimension de la zone riche en résine, mesurée selon un axe perpendiculaire à son grand axe.

Les exemples ci-après permettent d'illustrer l'invention, mais n'ont aucun caractère limitatif.

Le comportement à la microfissuration d'un stratifié composé de quatre couches de multiaxiaux quasi isotropique B/S/B/S avec B : [45° / 0° / 135° /90°] et S : [90° / 135° / 0° / 45°] a été étudié. L'empilement s'écrit alors en abrégé [[45° / 0° / 135° / 90°]$_S$]2

Chaque nappe unidirectionnelle d'un multiaxial est constituée de fibres HTS 5631 de la société Tenax, et est de masse surfacique 268g/m$^2$. Chaque multiaxial est cousu avec un pas de couture de 5mm, et la distance entre deux lignes de couture est de également 5mm, le type de couture est un « pas de chainette » (an anglais « chain stitch » ou « open pillar stitch »). La longueur de fil absorbée (LFA) est de 3800mm/m.

Quatre fils de couture ont été étudiés :

Exemple 1 conforme à l'invention : Polyester 23dTex (Grilon KE-160 de la société EMS-CHEMIE, CH-7013 Domat, Suisse)

Exemple comparatif 2 : Polyester 49dTex, type 712 de la société INVISTA (INVISTA Resins & Fibers GmbH & Co. KG, Werk Bad Hersfeld, Berliner Straße, 36251 Bad Hersfeld, Allemagne).

Exemple comparatif 3 : Polyester 35dTex (511W de la société Trevira GmbH, Guben 03172, Allemagne)

Exemple comparatif 4 : Polyhydroxyether (phenoxy) 150dTex (de la société EMS-CHEMIE, CH-7013 Domat, Suisse).

Les fils de couture sont livrés lavés par le fournisseur ou possèdent un très faible taux massique d'ensimage. Ainsi, les fils utilisés présentent les taux massiques d'ensimage suivants :

23dtex : taux massique < 1,2%
35dTex : taux massique : 0% (inscrit sur la fiche produit)
49dTex : taux massique < 0,1%
76dTex : taux massique : 0% (inscrit sur la fiche produit)

Les fils de couture utilisés présentent les ténacité et élongation à la rupture présentées **TABLEAU 1.**

**TABLEAU 1**

| Valeurs nominales | | |
|---|---|---|
| EN ISO 2060 - juin 1995 | EN ISO 2062 -1995 | EN ISO 2062 - 1995 |
| Titre | Ténacité de rupture | Elongation à la rupture |
| dTex | cN/Tex | % |
| 23 | 25 | 55 |
| 35 | 40 | 19 |
| 49 | 71 | 16 |
| 76 | 42 | 21 |

Chaque stratifié étudié est donc composé de quatre couches de multiaxiaux, chaque multiaxial étant composé de quatre nappes unidirectionnelles cousues entre elles avec les fils ci-dessus définis.

La fabrication du stratifié se déroule comme suit : les quatre séquences B/S/B/S sont découpées, en prenant soin de garder l'orientation 0° (celle de la machine, donc des points de couture) identique pour les quatre plis. Les plis sont ensuite empilés, pour former une préforme de 340 mm x 340 mm. Celle-ci est alors placée dans un moule d'injection sous une presse. Un cadre d'épaisseur 4mm entoure la préforme afin d'obtenir un taux volumique de fibres (TVF) de 60%.

La résine époxy commercialisée sous la référence HexFlow RTM6 par la société Hexcel est injectée à 80°C sous 200 kPa (2 bars) à travers la préforme qui est maintenue à 120°C, température des plateaux de la presse. La pression appliquée sur chacun des deux plateaux de la presse est de 500 kPa (5 bars). Lorsque que la résine apparaît au point de sortie du moule, le tuyau de sortie est fermé et le cycle de polymérisation commence (montée jusqu'à 180°C à 3°C/min, puis maintien 2 heures à 180°C, puis refroidissement à 5 °C/min).

Les statifiés sont soumis à un ou plusieurs cycles hygrothermiques, visant à simuler les cycles thermiques et les périodes d'humidification que peut subir une pièce aéronautique.

Des éprouvettes de taille 50mm x 60mm x 4mm sont découpées afin de subir le cycle hygrothermique qui suit. Chaque éprouvette est ensuite à nouveau coupée, puis polie, afin de compter les fissures apparues au cours du cycle appliqué.

Cycle hygrothermique :

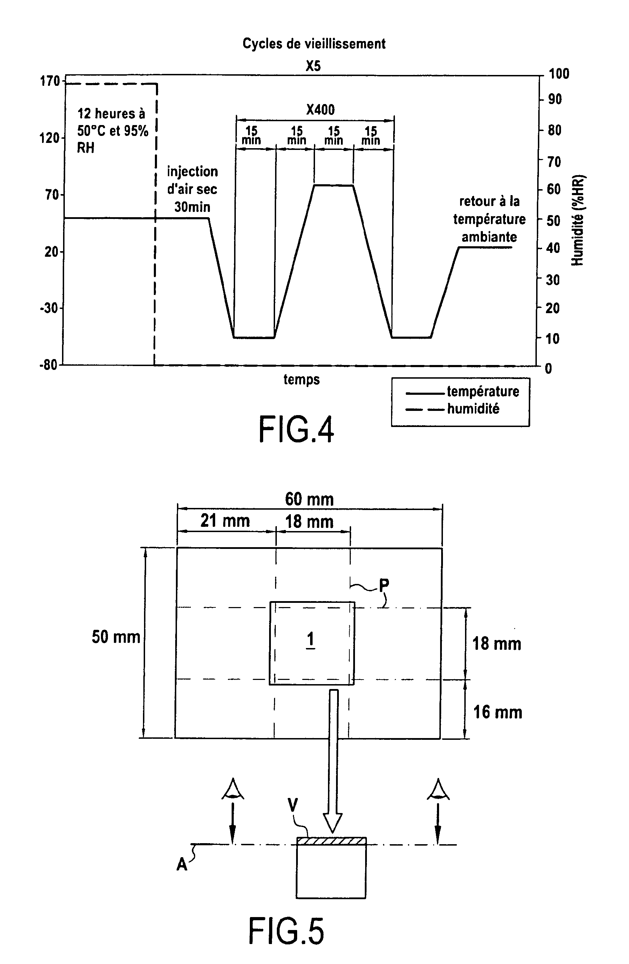

La sollicitation hygrothermique utilisée comporte plusieurs répétitions de deux phases : une phase stationnaire d'absorption d'humidité à 50°C et 95 % de taux d'humidité, suivie de cycles thermiques d'une heure. Ces cycles thermiques sont composés d'un palier d'un quart d'heure à -55°C, suivi d'une phase de changement de température d'une durée de 15 minutes, pour arriver à une température de 80°C, suivie d'un palier d'un quart d'heure à 80°C, suivi d'une nouvelle phase de changement de température de 15 minutes pour revenir à -55°C. La température négative a été choisie car elle correspond à celle subie par un avion en vol subsonique. La température positive a uniquement pour but d'accélérer la désorbtion d'humidité. Le cycle hygrothermique est présenté **Figure 4.**

La sollicitation, grâce à sa période d'humidification, provoque un gradient de concentration en eau au sein de l'éprouvette. Ce profil de concentration est différent sur les chants de l'éprouvette car les coefficients de diffusion sont plus grands dans le sens des fibres. L'orientation des fibres étant différente dans chaque nappe unidirectionnelle, les coefficients de diffusion le sont également, ce qui génère un profil de concentration en eau très complexe sur les bords de l'éprouvette. Il a été tenu compte de ce phénomène dans le dimensionnement de l'éprouvette et dans la définition de la zone à étudier.

Les cycles hygrothermiques sont réalisés au sein d'une enceinte « CTS (*Climatic Testing System*) », modèle CS-70/280-15 de la société Climatique et Thermique Service (ZAC du Pujol, 13390 Auriol, France), inlcuant un système de refroidissement par détente de liquide frigorigène de deux étages. Un groupe réfrigérant modèle Type 30 RA-040-B 0327-PEE de la société Carrier (CARRIER S.A.S. Route du Thil 01122 Monduel Cédex) permet de faire circuler un volume conséquent d'eau glycolée recyclée à 10°C dans le système de refroidissement du premier étage de l'enceinte climatique pour garantir son fonctionnement. Une tel dispositif permet de garantir une vitesse de refroidissement de 10°C/min et ce, même pour des températures inférieures à -50°C, ce qui est proche de la limite froide d'utilisation de l'enceinte, fixée entre 180°C et -70°C.

L'humidité dans le volume utile de l'enceinte est contrôlée et ajustée à l'aide d'un bain de rosée. A ce dispositif, a été ajouté un assécheur modèle ZANDER Type K-MT1 de la Société ZANDER (45219 ESSEN, Allemagne) par injection d'air sec. Une fois la consigne en humidité de l'assécheur fixée à 0 %, le volume est considéré comme entièrement sec.

Afin de compter les fissures par observation microscopique après le cycle hygrothermique, il a été établi un protocole de préparation des éprouvettes. La seule méthode directe d'observation de microstructures internes, telles que des microfissures à un matériau est la découpe puis le polissage du plan de découpe. Cette méthode est très répandue. Elle consiste à utiliser des toiles et des suspensions diamantées pour abraser la surface à polir de façon de plus en plus fine afin d'obtenir la planéité nécessaire à une bonne analyse.

Il a été choisi de d'utiliser des éprouvettes de 5x6 cm2, dans lesquelles les lignes de coutures sont parallèles au côté de 5 cm. Il existe donc deux plans d'observation équivalents. Dans chaque éprouvette ayant subi le cycle hygrothermique, des découpes, conformément à la **Figure 5** sont réalisées. L'échantillon central **1** est observé sur les plans d'observations présentés **Figure 5,** après polissage. Les plans de découpe ne sont pas localisés sur la couture, afin de permettre l'ajustement du plan d'observation lors du polissage.

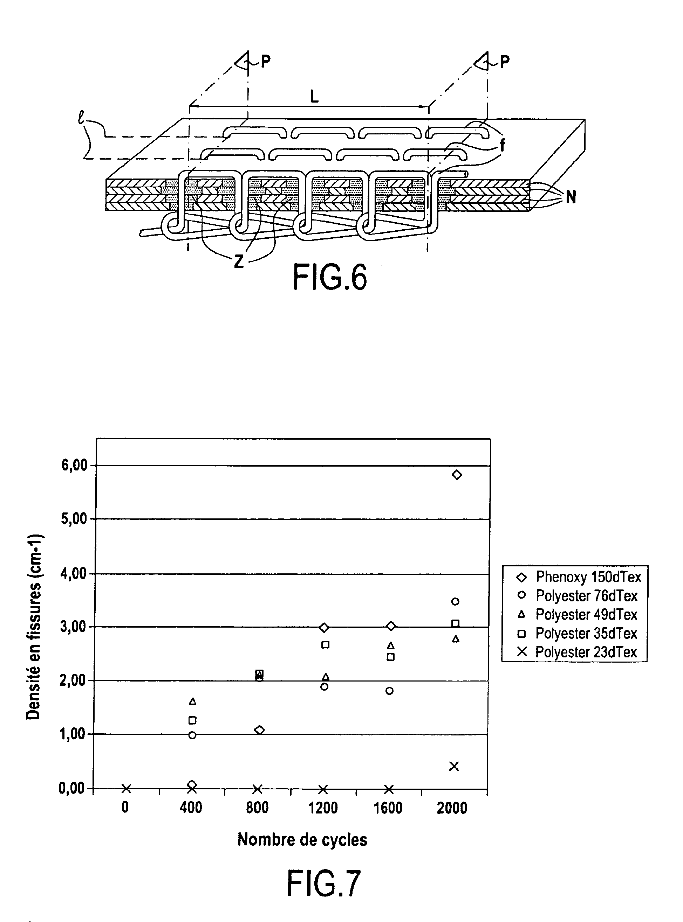

La localisation des plans de découpe **P,** par rapport aux fils de couture **f** et aux nappes unidirectionnelles **N** est représentée sur la **Figure 6.** Les plans **P** sont perpendiculaires, à la fois aux lignes de couture **l** et au plan des nappes unidirectionnelles **N.** Au niveau des fils de couture, les zones grisées **Z** représentent les zones riches en résine au niveau des fils de couture.

La méthode de polissage de l'échantillon jusqu'à l'état miroir, propice à l'observation, a été simplifiée par rapport à un métal, dans l'étape utilisant un papier à gros grains en raison de sa plus grande ductilité. Mais une finition plus soignée, entrecoupée de nettoyage en bain à ultrasons, est nécessaire lors de la phase finale de polissage par suspension diamantée.

La périodicité des zones riches en résine due à la périodicité des coutures assurant la liaison des nappes unidirectionnelles au sein des multiaxiaux composant le stratifié, impose de développer un protocole permettant de contrôler la localisation du plan d'observation. En effet, pour étudier ce qui se passe dans les zones de couture, il est nécessaire de focaliser l'étude dans la zone d'intérêt. Pour cela, il a été choisi de contrôler grossièrement la localisation du plan de découpe et d'ajuster la position du plan d'observation par rapport à la zone d'intérêt grâce à l'abrasion durant le polissage. Cette méthode permet une précision de l'ordre de 20 $\mu$m sur la position du plan de découpe, précision suffisante pour l'étude à mener.

Tout d'abord, la découpe des éprouvettes pour conduire à l'échantillon **1** est réalisée avec une tronçonneuse à lame circulaire en carbure de silicium. Cette découpe est réalisée par abrasion progressive, avec calibration de la vitesse d'avance de la lame.

Ensuite, le protocole de polissage suivant, qui permet d'obtenir un poli miroir propice à l'observation au microscope, est mis en oeuvre, au niveau du plan de découpe.

Protocole de polissage

Les échantillons sont enrobés dans de la résine 605 de LamPlan (résine acrylique polymérisée avec du méthacrylate de méthyle) et polis grâce à une polisseuse automatique à pression indépendante (Mécapol P320 de Presi). Pour cela, les échantillons découpés sont placés au fond d'un moule cylindrique. La surface à polir est orientée vers le fond du moule. Le moule est ensuite rempli d'une résine bicomposant d'enrobage à froid (LamPlan, 605) qui polymérise spontanément en environ 15min. Les échantillons sont ensuite démoulés et polis selon le protocole décrit.

Les différentes étapes du polissage sont données **TABLEAU 2.**

TABLEAU 2

| N° de l'étape | | grain papier | pression par échantillon | temps minimum |
|---|---|---|---|---|
| 1 | | P240 | 250 g/cm² | 40 s |
| 2 | | P600 | 250 g/cm² | facultatif |
| 3 | | P1000 | 250 g/cm² | 50 s |
| 3 min dans un bain à ultrasons | | | | |
| N° de l'étape | | suspension diamantée | pression par échantillon | temps |
| 4 | | 3μm | 100 g/cm² | 7 min |
| 3 min dans un bain à ultrasons | | | | |
| 5 | | 1μm | 100 g/cm² | 5 min |

Dans les étapes 1, 2 et 3, on utilise, pour la polisseuse automatique, une vitesse de rotation de 150 tours par minute en contrarotatif pour le plateau et la vitesse maximale pour la tête (100 tours par minute). Les impuretés sont évacuées à grande eau.

Dans les étapes 4 et 5, on utilise une vitesse de rotation de 300 tours par minute en contrarotatif pour le plateau et la vitesse maximale pour la tête (100 tours par minute). Les impuretés sont alors évacuées grâce à du lubrifiant introduit au goutte à goutte.

Le comptage des fissures est alors effectué par analyse d'images micrographiques obtenues par une caméra numérique 5 Megapixels (modèle U-TVO.5XC-2 - 4F04335 de la société OLYMPUS) monté sur un microscope (modèle GX 51 F - T2 SN 4 G 0 9299 de la société OLYMPUS), avec un objectif x 5 (grossissement x 50). Le logiciel d'analyse d'image utilisé est « Analysis Pro Five », commercialisé par la société Olympus France SAS, Parc d'affaire Silic, 74 rue d'Arcueil BP 90165, 94533 Rungis cedex, France.

Pour une observation de **Ni** fissures dans la nappe unidirectionnelle i sur un échantillon de longueur **L** avec un drapage laissant apparentes les fissures dans **p** nappes unidirectionnelles, un critère **d** est défini selon l'équation :

$$d = \frac{\sum_i N_i}{L \times p}$$

Le facteur **p** correspond au nombre de nappes unidirectionnelles total du stratifié moins le nombre de nappes unidirectionnelles dont les fibres de carbone sont parallèles au plan d'observation, compte tenu du fait que les fissures demeurent invisibles dans ces nappes unidirectionnelles.

Le facteur **d** est une densité linéique de fissures, exprimée en cm⁻¹, qui, compte tenu du choix de **L**, peut être considéré comme une caractéristique intrinsèque au matériau sous la sollicitation considérée.

Dans les multiaxiaux, l'observation permet de constater que les fissures se propagent de façon tout à fait originale : les zones de résines homogènes à l'intérieur de l'échantillon hétérogène permettent aux fissures de quitter l'orientation que leur imposent les fibres et de se réorienter d'un pli à l'autre

Le graphique présenté **Figure 7** montre les valeurs des facteurs **d** (nommé densité de fissures) obtenus sur des échantillons différents (étant donné que la méthode de mesure est destructrice), après un nombre de cycles hygrothermiques déterminé. Il est clairement mis en évidence que les stratifiés conformes à l'invention dans lesquels un fils en polyester de 23 dtex est utilisé présentent une densité de fissures beacoup moins importante.

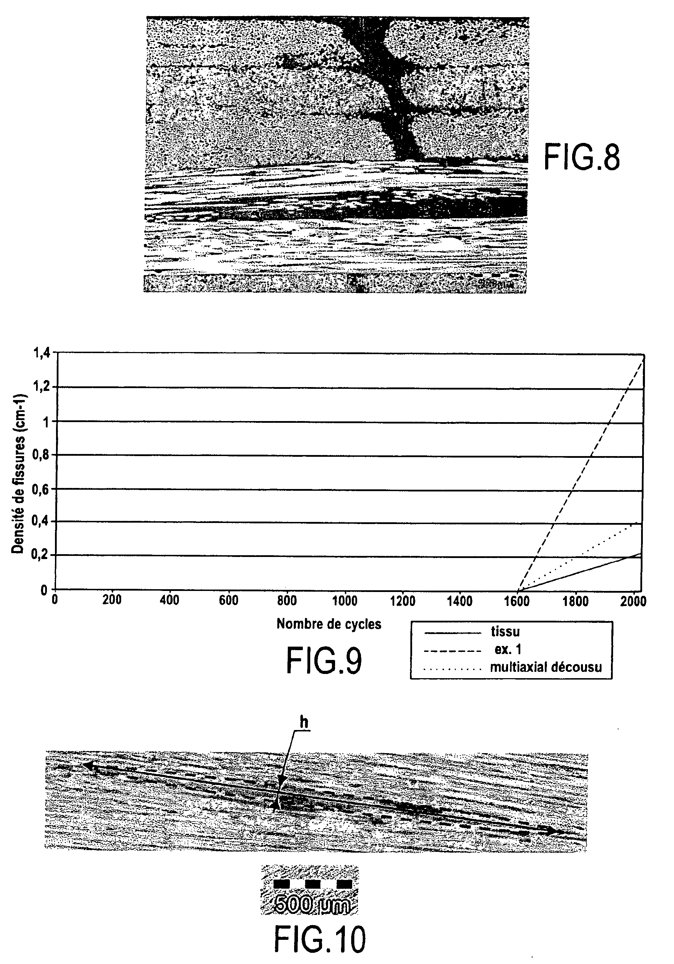

La **Figure 8** est une image d'une microfissure obtenue avec le stratifié de l'exemple comparatif 3 (polyester 35dtex), après 400 cycles hygrothermiques.

Il a été également mis en évidence que la densité de fissures est inférieure dans des stratifiés dont les zones riches sont de plus petite taille, étant donné que la taille des zones riches en résine est dépendante principalement du titre du fil utilisé pour la couture des différentes nappes.

Les stratifiés élaborés avec des nappes cousues avec des fils de 150, 76, 49 et 35 dtex ont tous montrés une sensibilité à la fissuration dès 400 cycles thermiques (800 dans le cas du fil de 150dTex en phénoxy).

Seul le stratifié élaboré avec des nappes cousues avec un fil de couture en polyester de 23 dTex n'a pas fissuré avant 1600 cycles thermiques.

La **Figure 9** présente l'évolution de la densité de fissures, en fonction du nombre de cycles hygrothermiques, dans le cas du stratifié de l'exemple 1, et de son équivalent réalisé avec des tissus dont le grammage est équivalent à une nappe du multiaxial, et de son équivalent réalisé avec des nappes multiaxiales décousues.

Il apparaît que l'apparition des fissures dans le stratifié conforme à l'invention coïncide avec l'apparition de fissures dans les matériaux non cousus. Il semble donc que coexistent deux modes de fissuration, l'un propre aux coutures et l'autre propre aux matériaux composites dans leur ensemble. De plus, dans le cas du stratifié selon l'invention, jusqu'à 1600 cycles thermiques, les fissures sont principalement localisées dans la zone de couture, alors qu'à 2000 cycles thermiques, les fissures ne sont plus uniquement situées dans la zone de couture, mais sont aussi présentes à l'extérieur des zones riches en résine.

Un tel résultat met en évidence l'apport de l'invention : la couture avec le fil 23dTex permet réellement de minimiser l'apparition des fissures, étant donné que les fissures qui apparaissent à partir de 1600 cycles ne sont pas dues à la couture, mais à la nature même du matériau composite.

La mesure des dimensions caractéristiques des zones riches en résine se fait par mesure directe sur micrographie optique. Le protocole de d'enrobage et de polissage permettant d'obtenir un état de surface propice à l'observation est le même que celui utilisé pour la caractérisation de la microfissuration. Le contrôle du volume d'échantillon abrasé lors du polissage, utilisé dans le cas précédent pour localiser l'étude sur les points de couture, est ici utilisé pour mesurer les dimensions caractéristiques dans des plis ayant la même position dans le référentiel de la nappe multiaxiale, c'est-à-dire à la même distance des boucles de couture.

La préparation des échantillons diffère cependant par la taille de l'échantillon et par son orientation dans le pion d'enrobage. Les échantillons sont découpés directement dans la plaque, sans modification d'épaisseur. La taille des échantillons est donc de 2x2cm$^2$ pour la surface étudiée.

Les échantillons ainsi découpés sont placés au fond d'un moule cylindrique de 32mm de diamètre. La surface à polir doit être orientée vers le fond du moule. L'échantillon est donc placé à plat et non sur la tranche comme pour la caractérisation de l'état de microfissuration interne.

Les dimensions des zones riches en résine, au niveau des fils de couture, ont été mesurées à partir des images micrographiques obtenues par une caméra numérique 5 Megapixels (modèle U-TVO.5XC-2 - 4F04335 de la société OLYMPUS) monté sur un microscope (modèle GX 51 F - T2 SN 4 G 0 9299 de la société OLYMPUS), avec un objectif x 5 (grossissement x 50) selon trois critères définis dans le **TABLEAU 3** ci-après. Le logiciel d'analyse d'image utilisé est « Analysis Pro Five », commercialisé par la société Olympus France SAS, Parc d'affaire Silic, 74 rue d'Arcueil BP 90165, 94533 Rungis cedex, France. Les mesures sont effectuées directement sur l'image grâce à l'entrée dans le logiciel de traitement d'image du grossissement utilisé pour la capture de l'image. Les images, compte tenu du plan de polissage, sont obtenues dans un plan parallèle aux nappes unidirectionnelles du produit intermédiaire et situé au niveau du milieu du produit intermédiaire. Ces mesures se font selon deux axes principaux : le grand axe et le petit axe de la zone lenticulaire. La **Figure 10** montre une zone riche en résine au niveau d'un fil de couture dans le cas du stratifié de l'exemple 1 réalisé avec un fil de 23dtex, et met en évidence le grand axe et la hauteur **h** sur le petit axe de la zone. Le grand axe est défini par la droite qui passe par les deux extrémités de la zone lenticulaire et le petit axe est perpendiculaire à l'axe précédent. La localisation du petit axe (nommé également hauteur **h**) correspond à l'endroit où sa valeur est maximale.

Quatre mesures ont été effectuées par échantillon, et ce pour chaque type de fil de couture. Le **TABLEAU 3** présente la moyenne des valeurs obtenues, avec les ecarts types à la moyenne. Il apparait que la principale différence entre les fils, en terme de mesures d'inclusion, est la « hauteur » de la zone riche en résine. Par « hauteur », nous entendons le petit axe de ce qui pourrait s'apparenter à une ellipse, tel que défini ci-dessus et qui délimite la zone riche en résine formée par le passage du fil de couture au travers de l'empilement cousu considéré, dans un plan parallèle aux nappes unidirectionnelles constitutives de l'empilement et situé au niveau du milieu de cet empilement.

## TABLEAU 3

| Fil | Distance (mm) | | |
|---|---|---|---|
| | grand axe | petit axe | taille fil selon grand axe |
| Phenoxy 150dTex | / | / | / |
| Polyester 76dTex | 2,20 +/- 0,20 | 0,18 +/- 0,02 | 0,20 +/- 0,10 |
| Polyester 49 dTex | 3,50 +/- 0,70 | 0,20 +/- 0,10 | 0,30 +/- 0,03 |
| Polyester 35dTex | 3,1 +/- 0,50 | 0,12 +/- 0,06 | 0,26 +/- 0,06 |
| Polyester 23dTex | 2,44 +/- 0,40 | 0,10 +/- 0,01 | 0,18 +/- 0,01 |

Dans le cas du stratifié selon l'invention, la « hauteur » de la zone riche en résine est 0,10mm.

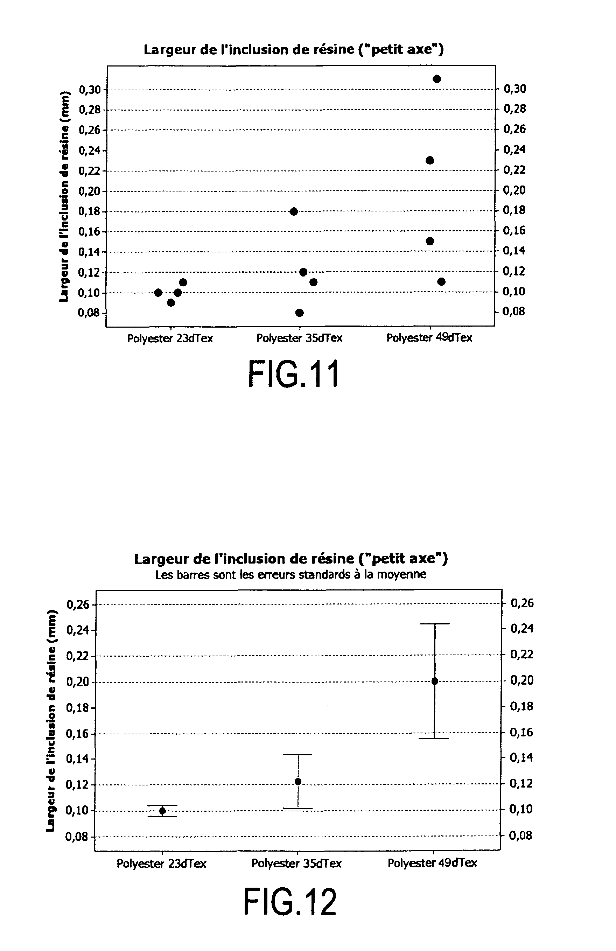

Les différents résultats obtenus sont présentés **Figures 11** et **12** et montrent clairement que le fil de 23dTex engendre les plus petites hauteurs de zones riches en résine.

Sur ces Figures, il apparaît également que, jusqu'à 50 dTex, la dispersion des hauteurs de zones riches en résine est d'autant plus importante que le fil a un titre élevé.

**Revendications**

1. Produit intermédiaire, destiné à la réalisation de pièce composite par association avec une matrice de résine thermodurcissable, constitué d'au moins deux nappes unidirectionnelles de fils de renfort, les fils de chacune des deux nappes s'étendant dans une direction différente, dans lequel les nappes sont liées entre elles, par couture ou tricotage au moyen d'au moins un fil de couture ou tricotage, **caractérisé en ce que** ledit fil de couture ou tricotage présente un titre déterminé selon la norme EN ISO 2060 inférieur ou égal à 30dTex, préférentiellement inférieur ou égal à 25dTex.

2. Produit intermédiaire selon la revendication 1 **caractérisé en ce que** le matériau constitutif du fil de couture ou tricotage est choisi parmi les polyesters (PET), les polypropylènes (PP), les polyéthylènes (PE), les polysulfures de phénylène (PPS), les polyéthylènes naphtalates (PEN), les polymères à cristaux liquides (LCP), les polycétones, les polyamides, le carbone, le verre, le basalte, la silice, et leur mélange.

3. Produit intermédiaire selon la revendication 1 ou 2 **caractérisé en ce que** le fil de couture ou tricotage est en un matériau présentant un taux de reprise d'humidité déterminé selon la norme ASTM D629-99 (paragraphe 9) inférieur ou égal à 0,4%.

4. Produit intermédiaire selon l'une des revendications précédentes **caractérisé en ce que** le fil de couture ou tricotage est en un matériau non soluble dans la matrice de résine, aux températures de constitution de la pièce composite.

5. Produit intermédiaire selon l'une des revendications précédentes **caractérisé en ce que** le fil de couture ou tricotage possède une ténacité de rupture mesurée selon ISO EN 2062 dans sa version de 1995 comprise entre 20cN/Tex et 100cN/Tex.

6. Produit intermédiaire selon l'une des revendications précédentes **caractérisé en ce que** le fil de couture ou tricotage possède une élongation à la rupture mesurée selon ISO EN 2062 dans sa version de 1995 comprise entre 10% et 60%.

7. Produit intermédiaire selon l'une des revendications précédentes **caractérisé en ce que** le fil de couture ou tricotage est un fil de 23 dtex de la famille des polyesters.

8. Produit intermédiaire selon l'une des revendications précédentes **caractérisé en ce que** les fils de renfort des nappes unidirectionnelles sont en un matériau choisi parmi les matériaux suivants : carbone, verre, basalte, aramide, silice, céramique et leurs mélanges.

**9.** Produit intermédiaire selon l'une des revendications précédentes **caractérisé en ce que** la masse surfacique de chacune des nappes unidirectionnelles est comprise dans la gamme allant de 50g/m$^2$ à 600g/m$^2$, préférentiellement dans la gamme allant de 130g/m$^2$ à 270g/m$^2$, déterminée selon la norme NF EN 12127 - Mars 1998.

**10.** Produit intermédiaire selon l'une des revendications précédentes **caractérisé en ce que** la liaison par couture ou tricotage est réalisée selon des points de couture ou tricotage, s'étendant sur des lignes parallèles.

**11.** Produit intermédiaire selon la revendication 9 **caractérisé en ce que** les points de couture ou tricotage sont espacés, au sein d'une même ligne de 1 à 20 mm, de préférence de 2 à 12 mm et les lignes de couture ou tricotage sont espacées l'une de l'autre de 2 à 50 mm, de préférence de 5 à 15 mm.

**12.** Produit intermédiaire selon l'une des revendications précédentes **caractérisé en ce qu'**il est composé de nappes unidirectionnelles s'étendant selon des orientations différentes choisies parmi les angles 0°, 30°, 45°, 60°, 90°, 120°, 135°.

**13.** Procédé de fabrication d'une pièce composite comprenant une étape d'addition, notamment par infusion ou injection, d'une résine thermodurcissable, à un matériau intermédiaire selon l'une des revendications précédentes, puis une étape de consolidation de la pièce souhaitée par une étape de polymérisation/réticulation suivant un cycle défini en température et sous pression, suivie d'un refroidissement.

**14.** Procédé selon la revendication 13 **caractérisé en ce que** la matrice de résine est choisie parmi les époxydes, les polyesters insaturés, les vinylesters, les polyuréthanes, les phénoliques, les polyimides, les bismaléimides et leur mélange.

**15.** Pièce composite composée au moins en partie d'une association d'un produit intermédiaire selon l'une des revendications 1 à 12 à une matrice de résine thermodurcissable, susceptible d'être obtenue selon le procédé de la revendication 13 ou 14.

**16.** Pièce composite selon la revendication 15 **caractérisée en ce qu'**elle associe un empilement de plusieurs produits intermédiaires selon l'une des revendications 1 à 12 à une matrice de résine thermodurcissable.

**17.** Pièce composite selon la revendication 15 ou 16 **caractérisée en ce qu'**elle présente des zones riches en résine au niveau des fils de couture dont la hauteur moyenne, mesurée dans un plan parallèle aux nappes unidirectionnelles du produit intermédiaire et situé au niveau du milieu du produit intermédiaire, est au plus égale à 0,11 mm.

**18.** Pièce composite selon l'une des revendications 15 à 17 choisie parmi les pièces de structure utilisées en aéronautique, tels les cadres de fuselage, les peaux de voilure, les peaux de fuselage, les peaux de dérives, les peaux d'empennage horizontal, les cloisons étanches, le caisson central, les aubes de réacteur.

**Claims**

**1.** Intermediate product for the fabrication of a composite part by association with a thermosetting resin matrix, consisting of at least two layers of unidirectional reinforcement fibers, the fibers of each of the two layers extending in a different direction, in which the layers are bonded together by stitching or knitting using at least one stitching or knitting yarn, **characterized in that** said stitching or knitting yarn has a count of less than or equal to 30 dTex, preferentially less than or equal to 25 dTex, as determined according to the EN ISO 2060 standard.

**2.** Intermediate product according to claim 1 **characterized in that** the material of the stitching or knitting yarn is selected from among polyesters (PET), polypropylenes (PP), polyethylenes (PE), polyphenylene sulfides (PPS), polyethylene naphthalates (PEN), liquid crystal polymers (LCP), polyketones, polyamides, carbon, glass, basalt, silica, and mixtures thereof.

**3.** Intermediate product according to claim 1 or 2 **characterized in that** the stitching or knitting yarn is a material with a moisture absorption factor of less than or equal to 0.4%, as determined by the ASTM D629-99 (paragraph 9) standard.

**4.** Intermediate product according to one of the preceding claims **characterized in that** the stitching or knitting yarn is made of a material insoluble in the matrix resin at the temperatures at which the composite part is created.

5. Intermediate product according to one of the preceding claims **characterized in that** the stitching or knitting yarn has a fracture toughness between 20 cN/Tex and 100 cN/Tex, as measured according to EN ISO 2062 in its 1995 version.

6. Intermediate product according to one of the preceding claims **characterized in that** the stitching or knitting yarn has a rupture elongation between 10% and 60%, as measured according to ISO EN 2062 in its 1995 version.

7. Intermediate product according to one of the preceding claims **characterized in that** the stitching or knitting yarn is a 23 dTex polyester yarn of the polyester family.

8. Intermediate product according to one of the preceding claims **characterized in that** the reinforcement fibers of the unidirectional layers are made of a material selected from the following materials: carbon, glass, basalt, aramid, silica, ceramic and mixtures thereof.

9. Intermediate product according to one of the preceding claims **characterized in that** the surface density of each of the unidirectional layers is in the range of 50 g/m$^2$ to 600 g/m$^2$, preferentially in the range of 130 g/m$^2$ to 270 g/m$^2$, as determined according to the standard NF EN 12127 - March 1998.

10. Intermediate product according to one of the preceding claims **characterized in that** the stitching or knitting bond is performed by stitches or knitting extending along parallel lines.

11. Intermediate product according to claim 9 **characterized in that** the stitching or knitting points are spaced within a same line by 1 to 20 mm, preferably 2 to 12 mm and the stitching or knitting lines are spaced by 2 to 50 mm from each other, preferably by 5 to 15 mm.

12. Intermediate product according to one of the preceding claims **characterized in that** it is composed of unidirectional layers extending in different orientations selected from among the angles 0°, 30°, 45°, 60°, 90°, 120°, 135°.

13. Manufacturing process for a composite part comprising a step of addition, notably by infusion or injection, of a thermosetting resin to an intermediate material according to one of the preceding claims, then a step of hardening the desired part by a stage of polymerization/reticulation in a cycle of defined temperature and pressure, followed by cooling.

14. Process according to claim 13 **characterized in that** the resin matrix is selected from among epoxies, unsaturated polyesters, vinyl esters, polyurethanes, phenolics, polyimides, bismaleimides, and mixtures thereof.

15. Composite part composed at least in part from the association of an intermediate product according to claims 1-12 with a matrix of thermosetting resin, obtainable according to the process of claim 13 or 14.

16. Composite part according to claim 15, **characterized in that** it combines a stack of several intermediate products according to one of the claims 1 to 12 with a thermosetting resin matrix.

17. Composite part according to claim 15 or 16 **characterized in that** it has resin-rich zones at stitches, whose average height, measured in a plane parallel to the unidirectional layers of the intermediate product and located at the middle the intermediate product, is at most equal to 0.11 mm.

18. Composite part according to claims 15 to 17 selected from among the structural parts used in aviation, such as fuselage frames, wing skins, fuselage skins, fin skins, horizontal tail skins, bulkheads, wing spar boxes, reactor blades.

**Patentansprüche**

1. Zwischenprodukt für die Herstellung eines Verbundteils durch Verbinden mit einer Matrix aus duroplastischem Harz, bestehend aus wenigstens zwei unidirektionalen Lagen aus Verstärkungsfäden, wobei die Fäden einer jeden der beiden Lagen in einer anderen Richtung verlaufen, wobei die Lagen durch Nähen oder Wirken mittels wenigstens eines Näh- oder Wirkfadens untereinander verbunden sind, **dadurch gekennzeichnet, daß** der Näh- oder Wirkfaden einen nach der Norm EN ISO 2060 bestimmten Titer von unter oder gleich 30 dTex, vorzugsweise von unter oder gleich 25 dTex aufweist.

2. Zwischenprodukt nach Anspruch 1, **dadurch gekennzeichnet, daß** das Material, aus dem der Näh- oder Wirkfaden besteht, aus den Polyestern (PET), den Polypropylenen (PP), den Polyethylenen (PE), den Polyphenylensulfiden (PPS), den Polyethylennaphthalaten (PEN), den Flüssigkristallpolymeren (LCP), den Polyketonen, den Polyamiden, Kohlenstoff, Glas, Basalt, Siliziumdioxid sowie ihrer Mischung ausgewählt ist.

3. Zwischenprodukt nach Anspruch 1 oder 2, **dadurch gekennzeichnet, daß** der Näh- oder Wirkfaden aus einem Material besteht, das eine nach der Norm ASTM D629-99 (Absatz 9) bestimmte Feuchtigkeitsaufnahme von unter oder gleich 0,4 % aufweist.

4. Zwischenprodukt nach einem der vorhergehenden Ansprüche, **dadurch gekennzeichnet, daß** der Näh- oder Wirkfaden aus einem Material besteht, das bei den Temperaturen zur Ausbildung des Verbundteils in der Harzmatrix nicht löslich ist.

5. Zwischenprodukt nach einem der vorhergehenden Ansprüche, **dadurch gekennzeichnet, daß** der Näh- oder Wirkfaden eine nach ISO EN 2062 in ihrer Fassung von 1995 gemessene Bruchfestigkeit im Bereich zwischen 20 cN/Tex und 100 cN/Tex aufweist.

6. Zwischenprodukt nach einem der vorhergehenden Ansprüche, **dadurch gekennzeichnet, daß** der Näh- oder Wirkfaden eine nach ISO EN 2062 in ihrer Fassung von 1995 gemessene Bruchdehnung im Bereich zwischen 10 % und 60 % aufweist.

7. Zwischenprodukt nach einem der vorhergehenden Ansprüche, **dadurch gekennzeichnet, daß** der Näh- oder Wirkfaden ein 23 dtex-Faden aus der Familie der Polyester ist.

8. Zwischenprodukt nach einem der vorhergehenden Ansprüche, **dadurch gekennzeichnet, daß** die Verstärkungsfäden der unidirektionalen Lagen aus einem Material bestehen, das aus den folgenden Materialien ausgewählt ist: Kohlenstoff, Glas, Basalt, Aramid, Siliziumdioxid, Keramik und ihren Mischungen.

9. Zwischenprodukt nach einem der vorhergehenden Ansprüche, **dadurch gekennzeichnet, daß** die flächenbezogene Masse einer jeden der unidirektionalen Lagen im Bereich von 50 g/m$^2$ bis 600 g/m$^2$ vorzugsweise im Bereich von 130 g/m$^2$ bis 270 g/m$^2$, bestimmt nach der Norm NF EN 12127 - März 1998, liegt.

10. Zwischenprodukt nach einem der vorhergehenden Ansprüche, **dadurch gekennzeichnet, daß** die Näh- oder Wirkverbindung entlang von auf parallelen Linien verlaufenden Näh- oder Wirkstellen erfolgt.

11. Zwischenprodukt nach Anspruch 9, **dadurch gekennzeichnet, daß** die Näh- oder Wirkstellen innerhalb einer gleichen Linie um 1 bis 20 mm, vorzugsweise um 2 bis 12 mm beabstandet sind und die Näh- oder Wirklinien um 2 bis 50 mm, vorzugsweise um 5 bis 15 mm voneinander beabstandet sind.

12. Zwischenprodukt nach einem der vorhergehenden Ansprüche, **dadurch gekennzeichnet, daß** es aus unidirektionalen Lagen besteht, die in unterschiedlichen Ausrichtungen, ausgewählt aus den Winkeln 0°, 30°, 45°, 60°, 90°, 120°, 135°, verlaufen.

13. Verfahren zur Herstellung eines Verbundteils, umfassend einen Schritt zur Zugabe, insbesondere durch Infusion oder Injektion, eines duroplastischen Harzes zu einem Zwischenmaterial nach einem der vorhergehenden Ansprüche, anschließend einen Schritt zur Verfestigung des gewünschten Teils mittels eines Polymerisations-/Vernetzungsschrittes nach einem definierten Zyklus unter Wärme und Druck, an den sich ein Abkühlen anschließt.

14. Verfahren nach Anspruch 13, **dadurch gekennzeichnet, daß** die Harzmatrix aus den Epoxiden, den ungesättigten Polyestern, den Vinylestern, den Polyurethanen, den Phenolharzen, den Polyimiden, den Bismaleimiden und ihrer Mischung ausgewählt ist.

15. Verbundteil, wenigstens teilweise aus einer Verbindung eines Zwischenprodukts nach einem der Ansprüche 1 bis 12 mit einer Matrix aus duroplastischem Harz bestehend, das geeignet ist, nach dem Verfahren des Anspruchs 13 oder 14 erhalten zu werden.

16. Verbundteil nach Anspruch 15, **dadurch gekennzeichnet, daß** es eine Anhäufung von mehreren Zwischenprodukten nach einem der Ansprüche 1 bis 12 mit einer Matrix aus duroplastischem Harz verknüpft.

17. Verbundteil nach Anspruch 15 oder 16, **dadurch gekennzeichnet, daß** es harzreiche Zonen im Bereich der Nähfäden aufweist, deren durchschnittliche Höhe, gemessen in einer zu den unidirektionalen Lagen des Zwischenprodukts parallelen und im Bereich der Mitte des Zwischenprodukts gelegenen Ebene, höchstens gleich 0,11 mm beträgt.

18. Verbundteil nach einem der Ansprüche 15 bis 17, das aus den in der Luftfahrt verwendeten Strukturteilen, wie Rumpfrahmen, Tragwerkhäuten, Rumpfhäuten, Häuten von Seitenleitwerken, Häuten des Höhenleitwerks, dichten Trennwänden, Flügelmittelkasten, Triebwerksschaufein ausgewählt ist.

FIG.1

FIG.2

FIG.3

Cycles de vieillissement

FIG.4

FIG.5

FIG.6

FIG.7

FIG.8

FIG.9

| | tissu |
| ------- | ------- |
| | ex. 1 |
| | multiaxial décousu |

FIG.10

**Largeur de l'inclusion de résine ("petit axe")**

FIG.11

**Largeur de l'inclusion de résine ("petit axe")**
Les barres sont les erreurs standards à la moyenne

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2761380

**Littérature non-brevet citée dans la description**

• **DE TSU WEI CHOU ; FRANCK.K.KO.** Textile Structural Composites, Composite Materials Series. Elsevier Science Publishers B.V, 1989, vol. 3